# EUROPEAN PATENT APPLICATION

(11) **EP 2 942 152 A1**
(43) Date of publication of application: **11.11.2015**
(21) Application number: 13869930.1
(22) Date of filing: 26.12.2013
(51) Int. Cl.: B24B 37/00

(54) **METHOD FOR POLISHING ALLOY MATERIAL AND METHOD FOR MANUFACTURING ALLOY MATERIAL**

(30) Priority: 04.01.2013 JP 2013000060
(71) Applicant: Fujimi Incorporated, Kiyosu-shi, Aichi 452-8502 (JP)
(72) Inventor: TAMAI, Kazusei, Kiyosu-shi Aichi 452-8502 (JP); ASAI, Maiko, Kiyosu-shi Aichi 452-8502 (JP); MORINAGA, Hitoshi, Kiyosu-shi Aichi 452-8502 (JP)
(74) Representative: Grünecker Patent- und Rechtsanwälte PartG mbB
(86) International application number: PCT/JP2013/084981
(87) International publication number: WO 2014/106944

(57) **Abstract**

An alloy material polishing method of the present invention is a method for polishing an alloy material containing a main component and 0.5% by mass or more of an accessory component element having a Vickers hardness (HV) different from that of the main component by 5 or more. The polishing method is characterized by polishing a surface of the alloy material using a polishing composition containing abrasive grains and an oxoacid-based oxidizing agent. The main component of the alloy material is preferably at least one selected from aluminum, titanium, iron, nickel, and copper. The main component of the alloy material is preferably aluminum, and the accessory component element is preferably at least one selected from silicon, magnesium, iron, copper, and zinc. The polishing method preferably includes preliminarily polishing the alloy material using a preliminary polishing composition before the polishing of the alloy material using the polishing composition.

## Description

### TECHNICAL FIELD

The present invention relates to a method for polishing an alloy material containing a main component and an accessory component element having different hardness from that of the main component using a polishing composition containing abrasive grains and an oxidizing agent, a polishing composition for use in the polishing method, a method for producing an alloy material using the polishing method, and an alloy material obtained by the production method.

### BACKGROUND ART

In general, an alloy is a eutectic consisting of one metallic element and one or more of other metallic elements or nonmetallic elements, such as carbon, nitrogen, and silicon. Alloys are typically produced for the purpose of improving characteristics such as mechanical strength, chemical resistance, corrosion resistance, and heat resistance compared to pure metals. Among various alloys, aluminum alloys have been used in various applications, for example, structural materials, such as building materials and containers, and transportation machines, such as automobiles, shipping, and aircrafts, as well as various electrical appliances, electronic components, and the like because of light weight and excellent strength thereof. Titanium alloys have been widely used in precision instruments, ornaments, tools, sports goods, medical components, and the like because of light weight and excellent corrosion resistance thereof. Stainless steels, which are iron-based alloys, and nickel alloys have been used in various applications, for example, structural materials and transportation machines, as well as tools, equipment, and cookware because of excellent corrosion resistance thereof. Copper alloys have been widely used in ornaments, tableware, musical instruments, electric material components, and the like because of excellent electrical conductivity, thermal conductivity, and corrosion resistance, as well as excellent processability and beauty of finishing thereof.

When these alloys are used, the alloy surfaces are required to be mirror finished depending on the application. Examples of the method for mirror finishing an alloy surface include painting and coating. If a mirror finished alloy surface is attained by polishing, however, there are advantages compared to the case of painting and coating. Polishing, for example, can provide a more excellent glossy mirror surface than the painted surface and eliminates the painting or coating step and the materials used therein. In addition, since the mirror surface by polishing has higher durability compared to the mirror surface by painting, the mirror surface by polishing has also an advantage to be maintained for a longer period of time.

Accordingly, there has been conventionally carried out mirror finishing or smoothing on alloy materials by polishing using a polishing composition. Patent document 1, for example, discloses a polishing composition containing an abrasive selected from the group consisting of silica, ceria, and zirconia, an agent oxidizing aluminum, such as hydrogen peroxide, and liquid carrier for use in polishing an aluminum alloy.

### PRIOR ART DOCUMENT

### PATENT DOCUMENT

Patent document 1: Japanese National Phase Laid-Open Patent Publication No. 2008-544868

### SUMMARY OF THE INVENTION

### PROBLEMS THAT ARE TO BE SOLVED BY THE INVENTION

The polishing composition described in Patent document 1, however, has the problem that the stability of the composition may be reduced in some cases. Reduction in the composition stability affects the polishing characteristics, e.g., retention of a high polishing rate for an alloy material and smoothness of a polished surface of an alloy material, thereby being likely to reduce the polishing efficiency.

The objects of the present invention are to provide an alloy material polishing method capable of efficiently finishing the surface of an alloy material containing a main component and an accessory component element having different hardness from that of the main component into an excellent mirror surface; a polishing composition for use in the polishing method; and a method for producing an alloy material using the polishing method. In addition, another object of the present invention is to provide an alloy material having a mirror surface excellent in surface smoothness.

### MEANS FOR SOLVING THE PROBLEM

The present inventors have found that, as a result of intensive studies, when an alloy material containing a main component and an accessory component element having different hardness from that of the main component is polished using a polishing composition containing abrasive grains and an oxoacid-based oxidizing agent, the stability of the composition is improved. In addition, the present inventors have also found that the oxoacid-based oxidizing agent oxidizes the alloy surface to form an oxide film that has high hardness and is brittle, and then the abrasive grains act to polish the oxide film, thereby efficiently providing an excellent mirror surface without surface defects.

In order to accomplish the objects described above and in accordance with an aspect of the present invention, there is provided a method for polishing an alloy material containing a main component and 0.5% by mass or more of an accessory component element having a Vickers hardness (HV) different from that of the main component by 5 or more, the method being characterized by polishing a surface of the alloy material using a polishing composition containing abrasive grains and an oxoacid-based oxidizing agent.

The main component of the alloy material is preferably at least one selected from aluminum, titanium, iron, nickel, and copper. The main component of the alloy material is preferably aluminum, and the accessory component element is preferably at least one selected from silicon, magnesium, iron, copper, and zinc. The oxoacid-based oxidizing agent is preferably at least one selected from nitric acid, nitrous acid, hypochlorous acid, oxalic acid, and salts thereof. The oxoacid-based oxidizing agent is preferably at least one selected from nitric acid and salts thereof. The abrasive grains are preferably colloidal silica. Preferably, the polishing method includes preliminarily polishing the alloy material using a preliminary polishing composition before the polishing of the alloy material using the polishing composition.

In accordance with another aspect of the present invention, there is provided a method for producing an alloy material, the method including polishing an alloy material using the alloy material polishing method described above.

In accordance with still another aspect of the present invention, there is provided an alloy material produced using the production method described above.

In accordance with still another aspect of the present invention, there is provided a polishing composition for use in the alloy material polishing method described above, the polishing composition being characterized by containing abrasive grains and an oxoacid-based oxidizing agent.

### EFFECTS OF THE INVENTION

The present invention succeeds in efficiently finishing the surface of an alloy material containing a main component and an accessory component element having different hardness from that of the main component into an excellent mirror surface.

### MODES FOR CARRYING OUT THE INVENTION

Hereinafter, there will be described an embodiment in which the present invention is specified as a method for polishing an alloy material.

The polishing method according to the present embodiment is a method for polishing an alloy material containing a main component and an accessory component element having different hardness from that of the main component using a polishing composition containing abrasive grains and an oxoacid-based oxidizing agent.

Alloy materials are each named based on the main component metal. Examples of the main components of alloy materials include aluminum, titanium, iron, nickel, and copper. Examples of alloy materials include aluminum alloys, titanium alloys, stainless steels (mainly composed of iron), nickel alloys, and copper alloys. A preferred alloy is an alloy containing an accessory component element having a Vickers hardness significantly different from that of the main component metal. In particular, the surface hardness of an alloy containing aluminum having low hardness and silicon having high hardness can be readily made uniform by the action of the oxidizing agent in the polishing composition. Therefore, the polishing method according to the present embodiment is preferably used in particular in polishing an aluminum alloy. When an aluminum alloy is used, a particularly high polishing rate can be obtained and an excellent mirror surface with gloss can be efficiently obtained at the same time.

Regarding accessory component elements contained in general alloys, some have similar hardness to that of the main component metal and others have different hardness from that of the main component metal. The alloy used in the present invention is preferably an alloy containing 0.5% by mass or more of an element having a Vickers hardness different from that of the main component metal by 5 HV or more.

The aluminum alloy is mainly composed of aluminum and contains, for example, silicon, iron, copper, manganese, magnesium, zinc, or chromium as an accessory component element having a Vickers hardness significantly different from that of aluminum. The accessory component element is preferably silicon, magnesium, iron, copper, or zinc. The content of the accessory component element in the aluminum alloy is preferably from 0.5 to 20% by mass. As examples of such aluminum alloys, there have been known those having the alloy numbers of 1050, 1050A, 1100, 1200, 1N00, 1N30, 2014, 2014A, 2017, 2017A, 2219, 2024, 3003, 3103, 3203, 3004, 3104, 3005, 3105, 5005, 5021, 5042, 5052, 5652, 5154, 5254, 5454, 5754, 5082, 5182, 5083, 5086, 5N01, 6101, 6061, 6082, 7010, 7075, 7475, 7178, 7N01, 8021, and 8079 as defined in Japanese Industrial Standards (JIS) H4000:2006. In addition, there have been known those having the alloy numbers of 1050, 1050A, 1100, 1200, 2011, 2014, 2014A, 2017, 2017A, 2117, 2024, 2030, 2219, 3003, 3103, 5N02, 5050, 5052, 5454, 5754, 5154, 5086, 5056, 5083, 6101, 6N01, 6005A, 6060, 6061, 6262, 6063, 6082, 6181, 7020, 7N01, 7003, 7050, 7075, and 7049A as defined in JIS H4040:2006. Further, there have been known those having the alloy numbers of 1050 A1050S, 1100 A1100S, 1200 A1200S, 2014 A2014S, 2014 A2014AS, 2017 A2017S, 2017 A2017AS, 2024 A2024S, 3003 A3003S, 3203 A3203S, 5052 A5052S, 5454 A5454S, 5083 A5083S, 5086 A5086S, 6101 A6101S, 6N01 A6N01 S, 6005A A6005AS, 6060 A6060S, 6061 A6061 S, 6063 A6063S, 6082 A6082S, 7N01 A7N01 S, 7003 A7003S, 7005 A7005S, 7020 A7020S, 7050 A7050S, and 7075 A7075S as defined in JIS H4100:2006.

The titanium alloy is mainly composed of titanium and contains, for example, aluminum, iron, or vanadium as an accessory component element having a Vickers hardness significantly different from that of titanium. The content of the accessory component element in the titanium alloy is preferably from 3.5 to 30% by mass. As examples of such titanium alloys, there have been known those of the types 11 to 23, the type 50, the type 60, the type 61, and the type 80 as defined in JIS H4600:2012.

The stainless steel is mainly composed of iron and contains, for example, chromium, nickel, molybdenum, or manganese as an accessory component element having a Vickers hardness significantly different from that of iron. The content of the accessory component element in the stainless steel is preferably from 10 to 50% by mass. As examples of such stainless steels, there have been known those of the type codes of SUS201, SUS303, SUS303Se, SUS304, SUS304L, SUS304NI, SUS305, SUS305JI, SUS309S, SUS310S, SUS316, SUS316L, SUS321, SUS347, SUS384, SUSXM7, SUS303F, SUS303C, SUS430, SUS430F, SUS434, SUS410, SUS416, SUS420J1, SUS420J2, SUS420F, SUS420C, and SUS631J1 as defined in JIS G4303:2005.

The nickel alloy is mainly composed of nickel and contains, for example, iron, chromium, molybdenum, or cobalt as an accessory component element having a Vickers hardness significantly different from that of nickel. The content of the accessory component element in the nickel alloy is preferably from 20 to 75% by mass. As examples of such nickel alloys, there have been known those having the alloy numbers of NCF600, NCF601, NCF625, NCF750, NCF800, NCF800H, NCF825, NW0276, NW4400, NW6002, and NW6022 as defined in JIS H4551:2000.

The copper alloy is mainly composed of copper and contains, for example, iron, lead, zinc, or tin as an accessory component element having a Vickers hardness significantly different from that of copper. The content of the accessory component element in the copper alloy is preferably from 3 to 50% by mass. As examples of such copper alloys, there have been known those having the alloy numbers of C2100, C2200, C2300, C2400, C2600, C2680, C2720, C2801, C3560, C3561, C3710, C3713, C4250, C4430, C4621, C4640, C6140, C6161, C6280, C6301, C7060, C7150, C1401, C2051, C6711, and C6712 as defined in JIS H3100:2006.

Then, description will be made concerning the polishing composition used in the polishing method according to the present embodiment.

The polishing composition contains abrasive grains and an oxoacid-based oxidizing agent.

"Oxoacid-based oxidizing agent" is a generic name of oxoacids having oxidizing ability enough to oxidize the main component contained in an alloy. Specific examples of the oxoacid-based oxidizing agent include nitric acid, nitrous acid, hypochlorous acid, oxalic acid, and salts thereof. In particular, nitric acid and salts thereof are preferably used since nitric acid and salts thereof readily provide a polished surface excellent in smoothness and are unlikely to corrode the substrate. Specific examples of the nitrate salts include potassium nitrate, sodium nitrate, and ammonium nitrate.

The content of the oxoacid-based oxidizing agent in the polishing composition is preferably 0.02% by mass or more, more preferably 0.03% by mass or more, and still more preferably 0.1% by mass or more. When the oxoacid-based oxidizing agent content is within the range described above, the surface defects after polishing are further suppressed from generating.

The content of the oxoacid-based oxidizing agent in the polishing composition is preferably 15% by mass or less, and more preferably 10% by mass or less. When the oxoacid-based oxidizing agent content is within the range described above, there can be reduced the impact on the environment by disposing the used polishing composition, i.e., waste liquid, in addition to reduction of the production cost of the polishing composition.

Examples of the abrasive grains include silicon oxide, aluminum oxide, cerium oxide, zirconium oxide, titanium oxide, manganese oxide, silicon carbide, and silicon nitride. Among them, silicon oxide is preferred, and colloidal silica or fumed silica is more preferred. When these abrasive grains are used, a smoother polished surface can be attained.

As colloidal silica, there may be used any of non-surface-modified colloidal silica and surface-modified colloidal silica. The non-surface-modified colloidal silica has a zeta potential close to zero under an acidic condition, and therefore the silica particles do not electrically repel each other, thereby being readily agglomerated under the acidic condition. In contrast, for colloidal silica that has been surface-modified so as to have a relatively large negative zeta potential even under an acidic condition, the silica particles strongly repel each other to be well dispersed under the acidic condition, thereby further enhancing the storage stability of the polishing composition.

Examples of the surface-modified colloidal silica include colloidal silica having an organic acid, such as a sulfonic acid and a carboxylic acid, immobilized to the surface thereof and colloidal silica of which surface has been substituted by a metal oxide, such as aluminum oxide. The immobilization of an organic acid to colloidal silica is performed by chemically bonding a functional group of the organic acid to the colloidal silica surface. The immobilization of a sulfonic acid to colloidal silica may be performed by, for example, the method described in "Sulfonic acid-functionalized silica through quantitative oxidation of thiol groups", Chem. Commun. 246-247 (2003). Specifically, colloidal silica having a sulfonic acid immobilized to the surface thereof may be obtained by coupling a silane coupling agent having a thiol group, such as 3-mercaptopropyltrimethoxysilane, to colloidal silica, followed by oxidizing the thiol group with hydrogen peroxide. The immobilization of a carboxylic acid to colloidal silica may be performed by, for example, the method described in "Novel Silane Coupling Agents Containing a Photolabile 2-Nitrobenzyl Ester for Introduction of a Carboxy Group on the Surface of Silica Gel", Chemistry Letters, 3, 228-229 (2000). Specifically, colloidal silica having a carboxylic acid immobilized to the surface thereof may be obtained by coupling a silane coupling agent containing photoreactive 2-nitrobenzyl ester to colloidal silica, followed by photoirradiation. The substitution of the colloidal silica surface by aluminum oxide is performed by adding an aluminum compound to colloidal silica and allowing the aluminum compound and colloidal silica to react with each other. The substitution may be performed by, for example, the method described in Japanese Laid-Open Patent Publication No. 6-199515. Specifically, the colloidal silica of which surface has been substituted by aluminum oxide may be obtained by adding an alkali aluminate to colloidal silica and heating the mixture.

When the surface-modified colloidal silica is used, the pH of the polishing composition is preferably within the range of 0.5 to 4.5. A modification group, such as a sulfo group, is present on the surface of the surface-modified colloidal silica. Therefore, when the pH of the polishing composition is within the range of 0.5 to 4.5, the surface-modified colloidal silica is more stably dispersed in the polishing composition, thereby leading to a high polishing rate. Using colloidal silica that has been surface-modified with a sulfonic acid, among the surface-modified colloidal silica, is particularly preferred in terms of enhancement of the polishing rate.

When the non-surface-modified colloidal silica is used, the pH of the polishing composition is preferably within the range of 8.0 to 12.0. A hydroxyl group is present on the surface of the non-surface-modified colloidal silica. Therefore, when the pH of the polishing composition is within the range of 8.0 to 12.0, the colloidal silica is more stably dispersed in the polishing composition, thereby leading to a high polishing rate.

The mean particle size of the abrasive grains contained in the polishing composition is preferably 5 nm or more, more preferably 10 nm or more, and still more preferably 15 nm or more. When the mean particle size of the abrasive grains is within the range described above, the polishing rate for the alloy material is more enhanced.

The mean particle size of the abrasive grains contained in the polishing composition is preferably 400 nm or less, more preferably 300 nm or less, still more preferably 200 nm or less, and most preferably 100 nm or less. When the mean particle size of the abrasive grains is within the range described above, it is easier to obtain a surface having less defects and a low surface roughness. When remaining abrasive grains having a large particle size on the alloy material after polishing is a problem, it is preferred to use abrasive grains having a small particle size and not containing large particles.

The mean particle size of the abrasive grains may be calculated from the measured value of the specific surface area thereof by a nitrogen adsorption method (BET method).

The content of the abrasive grains in the polishing composition is preferably 1% by mass or more, and more preferably 2% by mass or more. When the abrasive grain content is within the range described above, the polishing rate for the alloy material by the polishing composition is more enhanced.

The content of the abrasive grains in the polishing composition is preferably 50% by mass or less, and more preferably 40% by mass or less. When the abrasive grain content is within the range described above, the production cost of the polishing composition is reduced, and additionally, a polished surface having less scratches can be readily obtained. In addition, the above abrasive grain content results in reduction of the amount of the abrasive grains remaining on a polished surface of the alloy, thereby improving cleanliness of the alloy surface.

The polishing composition used in the present invention may contain a pH adjusting agent. When the pH of the polishing composition is adjusted using the pH adjusting agent, there may be controlled the polishing rate for the alloy material and the dispersity of the abrasive grains. For the pH adjusting agent, known acids, bases, or salts thereof may be used. Specific examples of the acids usable as the pH adjusting agent include inorganic acids, such as hydrochloric acid, sulfuric acid, nitric acid, hydrofluoric acid, boric acid, carbonic acid, hypophosphorous acid, phosphorous acid, and phosphoric acid; and organic acids, such as formic acid, acetic acid, propionic acid, butyric acid, valeric acid, 2-methylbutyric acid, n-hexanoic acid, 3,3-dimethylbutyric acid, 2-ethylbutyric acid, 4-methylpentanoic acid, n-heptanoic acid, 2-methylhexanoic acid, n-octanoic acid, 2-ethylhexanoic acid, benzoic acid, glycolic acid, salicylic acid, glyceric acid, oxalic acid, malonic acid, succinic acid, glutaric acid, adipic acid, pimelic acid, maleic acid, phthalic acid, malic acid, tartaric acid, citric acid, lactic acid, diglycolic acid, 2-furancarboxylic acid, 2,5-furandicarboxylic acid, 3-furancarboxylic acid, 2-tetrahydrofurancarboxylic acid, methoxyacetic acid, methoxyphenylacetic acid, and phenoxyacetic acid. Among the inorganic acids, sulfuric acid, nitric acid, and phosphoric acid are particularly preferred in terms of enhancement of the polishing rate. Among the organic acids, preferred are glycolic acid, succinic acid, maleic acid, citric acid, tartaric acid, malic acid, gluconic acid, and itaconic acid.

Examples of the bases usable as the pH adjusting agent include amines, such as aliphatic amines and aromatic amines; organic bases, such as quaternary ammonium hydroxides; alkali metal hydroxides, such as potassium hydroxide; alkaline earth metal hydroxides; and ammonia. Among them, potassium hydroxide and ammonia are preferred because of easy availability.

Salts such as ammonium salts or alkali metal salts of the acids described above may be used as the pH adjusting agent in place of the acids described above or in combinations with the acids described above. In particular, when a combination of a weak acid and a strong base, a strong acid and a weak base, or a weak acid and a weak base is employed, a buffering action for the pH may be expected. One of the pH adjusting agents may be used alone or two or more thereof may be used in combination.

The adding quantity of the pH adjusting agent is not particularly limited, and may be suitably adjusted depending on the ingredients in the polishing composition or the like. The lower limit of the pH of the polishing composition used in the present invention is preferably 0.5 or more, and more preferably 8 or more. The more the pH of the polishing composition is, the more dispersity of the abrasive grains is improved.

The upper limit of the pH of the polishing composition used in the present invention is preferably 12 or less, and more preferably 11.5 or less. The less the pH of the polishing composition is, the more dispersity of the particles, safety of the composition, and economy of the composition are improved.

The polishing composition used in the present invention preferably contains water as a dispersion medium or a solvent for dispersing or dissolving each ingredient. It is preferred to use water containing impurities as less as possible in order to prevent actions of other ingredients from being inhibited. Specific examples of water as the dispersion medium or the solvent are preferably pure water or super-pure water obtained by removing impurity ions with ion exchange resins or passing through filters to remove foreign matters, or distilled water.

The polishing composition used in the present invention may further contain as necessary any of etching agents; oxidizing agents to oxidize the alloy material surface; water-soluble polymers, water-soluble copolymers, salts and derivatives thereof to act on the alloy material surface and the abrasive grain surface; anticorrosives and chelating agents to suppress the alloy material surface from being corroded; dispersing auxiliaries to facilitate redispersion of the abrasive grain agglomerate; and other ingredients, such as preservatives and antifungal agents, having other functions, to an extent not inhibiting the effect of the present invention.

Examples of the etching agents include inorganic acids, such as nitric acid, sulfuric acid, and phosphoric acid; organic acids, such as acetic acid, citric acid, tartaric acid, and methanesulfonic acid; inorganic alkalis, such as potassium hydroxide and sodium hydroxide; and organic alkalis, such as ammonia, amines, and quaternary ammonium hydroxides.

Examples of the oxidizing agents include hydrogen peroxide, peracetic acid, percarbonates, urea peroxide, perchlorates, and persulfates.

Examples of the water-soluble polymers, the water-soluble copolymers, and salts and derivatives thereof include polycarboxylic acids, such as polyacrylic acid salts; polyphosphoric acid; polysulfonic acids, such as polystyrene sulfonic acid; polysaccharides, such as xanthan gum and sodium alginate; cellulose derivatives, such as hydroxyethyl cellulose and carboxymethyl cellulose; polyethylene glycol; polyvinyl alcohol; polyvinyl pyrrolidone; polyoxyethylene alkyl ethers; polyoxyethylene alkyl phenyl ethers; sorbitan monooleate; oxyalkylene polymers having a single type of oxyalkylene unit or different types of oxyalkylene units.

Examples of the anticorrosives include amines, pyridines, tetraphenylphosphonium salts, benzotriazoles, triazoles, tetrazoles, and benzoic acid.

Examples of the chelating agents include carboxylic acid chelating agents, such as gluconic acid; amine chelating agents, such as ethylenediamine, diethylenetriamine, and trimethyltetraamine; polyaminopolycarboxylic chelating agents, such as ethylenediaminetetraacetic acid, nitrilotriacetic acid, hydroxyethylethylenediaminetriacetic acid, triethylenetetraminehexaacetic acid, and diethylenetriaminepentaacetic acid; organic phosphonic acid chelating agents, such as 2-aminoethylphosphonic acid, 1-hydroxyethylidene-1,1-diphosphonic acid, aminotri(methylenephosphonic acid), ethylenediaminetetrakis(methylenephosphonic acid), diethylenetriaminepenta(methylenephosphonic acid), ethane-1,1-diphosphonic acid, ethane-1,1,2-triphosphonic acid, methanehydroxyphosphonic acid, and 1-phosphonobutane-2,3,4-tricarboxylic acid; phenol derivatives; and 1,3-diketones.

Examples of the dispersing auxiliaries include condensed phosphate salts, such as pyrophosphate salts and hexametaphosphate salts.

Examples of the preservatives include sodium hypochlorite.

Examples of the antifungal agents include oxazolines, such as oxazolidine-2,5-dione.

In some cases, the polishing composition may be required not only to attain a high polishing rate but also to have good ease of washing off at the same time. In these cases, it is preferred to add an inorganic acid (including a pH adjusting agent) to the polishing composition, thereby making pH thereof a low value (e.g., pH of 0.5 to 4.5) and also to use the surface-modified colloidal silica as the abrasive grains. The increased abrasive grain content typically enhances the polishing rate but reduces the ease of washing off. Therefore, it is difficult to enhance both the polishing rate and the ease of washing off. On the other hand, addition of an inorganic acid to the polishing composition enhances the polishing rate due to a chemical action of the inorganic acid even when the abrasive grain content in the polishing composition is low. In this way, the polishing rate and the ease of washing off can be enhanced at the same time. In addition, the surface-modified colloidal silica can stably exert a function as the abrasive grains even in the polishing composition that has a low pH by the addition of the inorganic acid.

The polishing composition having been used for polishing an alloy may be collected and reused for polishing. More specifically, the used polishing composition having been discharged from the polishing apparatus may be once collected in a tank, and then supplied to the polishing apparatus again from the tank. In this case, the impact of the environment can be reduced because of reduction of the amount of the used polishing composition that is required to be treated as waste fluid. In addition, the cost for polishing the alloy material also can be suppressed since the quantity of the consumed polishing composition is reduced.

When the polishing composition is circularly used, the ingredients in the polishing composition such as the abrasive grains and the oxoacid-based oxidizing agent are consumed and lost through the polishing. Thus, each of these ingredients in the amount corresponding to the loss thereof may be supplemented to the polishing composition being circularly used. The ingredients to be supplemented may be individually added to the polishing composition, or alternatively, added to the polishing composition as a mixture containing two or more ingredients at any ratio depending on the capacity of the tank or the polishing conditions. When the ingredients having been diminished in the polishing composition are thus supplemented, the polishing composition is maintained in a state suitable for reuse, thereby sustaining the required polishing performance.

Then, description will be made concerning a method for producing the polishing composition used in the present invention.

The method for producing the polishing composition used in the present invention is not particularly limited, and the polishing composition may be produced by, for example, mixing and stirring the abrasive grains and the oxoacid-based oxidizing agent, and if necessary, other ingredients in water. The temperature at which the ingredients are mixed is not particularly limited, but preferably from 10 to 40°C. The mixture may be heated to a temperature above the temperature range described above in order to enhance the dissolving rate. The mixing period of time is also not particularly limited.

Then, description will be made concerning the alloy material polishing method according to the present invention and the alloy material production method using the polishing method.

The polishing composition described above is used for polishing an alloy material. Therefore, the present invention provides a method for polishing an alloy material using the polishing composition described above. In addition, the present invention provides a method for producing an alloy material, the method including polishing an alloy material using the polishing method.

When an alloy is polished using the polishing composition, there may be used an apparatus and conditions same as the apparatus and the conditions commonly used for polishing ordinary metal materials. The typical polishing apparatus includes a single-sided polishing apparatus and a double-sided polishing apparatus. When a single surface of an alloy material is polished using the single-sides polishing apparatus, the alloy material is held using a carrier, a platen on which a polishing pad has been pasted is pressed against the single surface of the alloy material and the platen is rotated, while the polishing composition being supplied. When both surfaces of an alloy material are polished using the double-sided polishing apparatus, the alloy material is held using a carrier, two platens on each of which a polishing pad has been pasted are pressed against the both surfaces of the alloy materials and the two platens are rotated in opposite directions to each other, while the polishing composition being supplied from the upper side. During the polishing, the alloy material is polished by a physical action due to friction of the alloy material against the polishing pad and the abrasive grains in the polishing composition and a chemical action that other ingredients than the abrasive grains in the polishing composition bring to the alloy.

A polishing load is included in the polishing conditions in the polishing method according to the present invention. Typically, the larger the polishing load is, the more the friction force between the abrasive grains and the alloy material is enhanced. As a result, the mechanical processing efficiency is improved, thereby enhancing the polishing rate. In the polishing method according to the present invention, the polishing load applied to the alloy material is not particularly limited, but preferably from 50 to 1,000 g/cm², more preferably from 100 to 800 g/cm², and still more preferably from 300 to 600 g/cm². When the polishing load is within the range described above, a sufficient polishing rate is exerted, and in addition to this, there can be reduced breakage of the object to be polished and occurrence of the surface defects.

A linear velocity is included in the polishing conditions in the polishing method according to the present invention. The linear velocity is typically affected by the rotational frequency of the polishing pad, the rotational frequency of the carrier, and the dimension and the number of the object to be polished. When the linear velocity is large, the friction force applied to the object to be polished is increased, and therefore the object to be polished is readily mechanically polished. In addition, the heat generated by the friction may enhance the chemical polishing action by the polishing composition in some cases. The linear velocity is not particularly limited, but preferably from 10 to 300 m/min, and more preferably from 30 to 200 m/min. When the linear velocity is in the range described above, a sufficient polishing rate can be attained, and further, the polishing pad can be suppressed from being broken by the friction against the object to be polished. In addition, by the sufficient friction force applied to the polishing pad, satisfactory polishing can be performed without slipping of the polishing pad on the object to be polished.

The polishing pad used in the polishing method using the polishing composition according to the embodiment described above is not limited by the material, the thickness, or the physical properties such as hardness. There may be used, for example, polishing pads such as those of polyurethane type, nonwoven type, or suede type having various hardness and thickness. Alternatively, there may be used either a polishing pad containing abrasive grains or one containing no abrasive grains. Among them, preferred are polishing pads of the suede type containing no abrasive grains. Among the polishing pads of the suede type, more preferred are those of which deformation due to the pressure during the polishing processing is small, in other words, those having high hardness. Specifically, preferred are polishing pads of the suede type having a hardness of 78 or more as determined by the method using TECLOCK (registered trademark) specified in Japanese Industrial Standards (JIS) K6253:1997. Polishing pads of the suede type having high hardness may be obtained by, for example, using polyethylene terephthalate or nonwoven in the substrate.

A supplying rate of the polishing composition is included in the polishing conditions in the polishing method according to the present invention. The supplying rate of the polishing composition depends on the type of the alloy material to be polished, the type of the polishing apparatus, and other polishing conditions, and preferably is a sufficient rate enough for the polishing composition to be equally supplied over whole of the alloy material and the polishing pad.

The alloy material may be preliminarily polished using a preliminary polishing composition before the alloy material is polished using the polishing method according to the present embodiment. There may be present flaws resulting from machining or transportation of the alloy material on the surface of the alloy material in some cases. It would take much time to remove those flaws to obtain a mirror surface in a single polishing step, thereby being wasteful, and in addition to this, be likely to spoil smoothness of the polished surface. When such flaws on the alloy material surface have been removed in the preliminary polishing step, the time required for the following polishing using the polishing composition can be shortened, and thus, an excellent mirror surface can be expected to be efficiently attained.

Hereinafter, description will be made concerning the preliminary polishing composition used in the preliminary polishing step.

The preliminary polishing composition preferably has higher polishing ability compared to the polishing composition. Specifically, the preliminary polishing composition preferably contains abrasive grains having higher hardness and a larger particle size compared to the abrasive grains in the polishing composition.

Examples of the abrasive grains contained in the preliminary polishing composition include silicon carbide, aluminum oxide (alumina), zirconia, zircon, ceria, and titania, but the abrasive grains are not limited thereto. Among these abrasive grains, aluminum oxide is particularly preferably used. Types of aluminum oxide are not particularly limited, and there may be used, for example, α-alumina, δ-alumina, θ-alumina, κ-alumina, and alumina of other crystal forms. Aluminum oxide may contain impurity elements other than aluminum, such as silicon, titanium, iron, copper, chromium, sodium, potassium, calcium, and magnesium.

When the object to be polished is a hard and brittle material and is required to be polished in a higher rate, alumina abrasive grains mainly composed of α-alumina are preferably used. α-Alumina accounts for preferably 20% or more of alumina composing the alumina abrasive grains, and more preferably 40% or more. The proportion of α-alumina in the alumina abrasive grains may be determined from the proportion of the integrated intensity of the X-ray diffraction line assigned to the (113) face in the X-ray diffraction measurement.

The mean particle size of the abrasive grains contained in the preliminary polishing composition is preferably 0.1 µm or more, and more preferably 0.3 µm or more. When the mean particle size of the abrasive grains is within the range described above, there is enhanced the polishing rate for the alloy material with the preliminary polishing composition.

The mean particle size of the abrasive grains contained in the preliminary polishing composition is preferably 20 µm or less, and more preferably 5 µm or less. When the mean particle size of the abrasive grains is within the range described above, it is easier to obtain a polished surface having less defects and a low surface roughness. Determination of the mean particle size of the abrasive grains may be performed, for example, using a laser diffraction/scattering type particle size distribution measuring apparatus, such as "LA-950" (Horiba, Ltd.).

The specific surface area of the abrasive grains contained in the preliminary polishing composition is preferably 20 m²/g or less. When the specific surface area of the abrasive grains is within the range described above, there is enhanced the polishing rate for the object to be polished with the preliminary polishing composition.

The specific surface area of the abrasive grains contained in the preliminary polishing composition is preferably 5 m²/g or more. When the specific surface area of the abrasive grains is within the range described above, it is easier to obtain a polished surface having less defects and a low surface roughness. Determination of the specific surface area of the abrasive grains may be performed, for example, using "Flow Sorbll 2300" (Micromeritics Instrument Corporation).

The content of the abrasive grains in the preliminary polishing composition is 0.5% by mass or more, and more preferably 1% by mass or more. When the abrasive grain content is within the range described above, there is enhanced the polishing rate for the alloy material with the preliminary polishing composition.

The content of the abrasive grains in the preliminary polishing composition is 20% by mass or less, and more preferably 10% by mass or less. When the abrasive grain content is within the range described above, the production cost of the preliminary polishing composition is reduced, and additionally, there can be reduced the scratches on the alloy surface after the preliminary polishing.

The preferred pH of the preliminary polishing composition varies depending on the types of the alloy to be polished similarly to the pH of the polishing composition. The pH of the preliminary polishing composition is adjusted with a known acid, base, or salts thereof.

When, among them, an organic acid, in particular, glycolic acid, succinic acid, maleic acid, citric acid, tartaric acid, malic acid, gluconic acid, or itaconic acid is used for adjusting the pH of the preliminary polishing composition, enhancement of the polishing rate is expected due to the action thereof to the abrasive grain surface.

Then, description will be made concerning the action of the alloy material polishing method according to the present embodiment and the action of the alloy material production method using the polishing method.

In the present embodiment, an alloy containing a main component and an accessory component element having different hardness from that of the main component is polished using a polishing composition containing abrasive grains and an oxoacid-based oxidizing agent. In this case, the stability of the polishing composition is improved, and in addition to this, the oxoacid-based oxidizing agent oxidizes the alloy surface to form an oxide film that has high hardness and is brittle and the abrasive grains act to polish the oxide film, thereby efficiently providing an excellent mirror surface without surface defects.

According to the alloy material polishing method of the present embodiment and the alloy material production method using the polishing method, the following effects can be obtained.
(1) According to the polishing method of the present embodiment, the surface of an alloy material can be efficiently finished into an excellent mirror surface.
(2) The stability of the polishing composition can be improved by using the polishing composition comprising abrasive grains and an oxoacid-based oxidizing agent.
(3) An alloy material having a glossy mirror surface excellent in surface smoothness can be obtained by polishing the alloy material using the polishing composition containing abrasive grains and an oxoacid-based oxidizing agent.

The embodiment described above may be modified as follows.
- The polishing composition may be prepared by diluting an undiluted polishing composition with water.
- The polishing composition may be of one-pack type or multi-pack type composed of two or more of packs. Two or more of packs may be supplied to a polishing apparatus through separate channels and mixed within the polishing apparatus to prepare the polishing composition.

### Examples

Then, Examples of the present invention and Comparative Examples will be described.

### (Test 1)

Non-surface-modified colloidal silica having a mean particle size of 78 nm was diluted with water, and further the respective oxidizing agents were added thereto, thereby polishing compositions of Formula 1 through Formula 4 were prepared. The polishing composition of Formula 5 was prepared without addition of the oxidizing agent. For each polishing composition, there are set forth the concentration and the mean particle size of the colloidal silica, the type and the concentration of the oxidizing agent, and pH in Table 2.

Aluminum alloys were prepared as the alloys to be polished. The types of the used aluminum alloys are as set forth in the column of "Alloy material" in Table 3. Polishing of each aluminum alloy was carried out using each of the prepared polishing compositions of Formula 1 through Formula 5 under the conditions set forth in Table 1. Then, the polishing rate and the surface roughness of the polished surface of the alloy material were determined for each Example or Comparative Example by the following methods, and the storage stability of each polishing composition was evaluated by the following method.

The aluminum alloys had been preliminarily polished prior to polishing using the polishing compositions of Formula 1 through Formula 5, and the object to be polished was a surface having been preliminarily polished so that surface roughness Ra thereof was about 20 nm. "5052" set forth in the column of "Alloy material" in Table 3 refers to the alloy number 5052 described in JIS H4000:2006 and "6063" refers to the alloy number 6063 described in JIS H4040:2006.

### <Polishing rate>

The weight of the alloy material was measured before and after polishing using each polishing composition. The polishing rate was calculated from the weight difference between before and after polishing. The results are set forth in the column "Polishing rate" in Table 3 below.

### <Surface roughness>

For each Example or Comparative Example, "Ra" indicating the surface roughness of the polished surface of the alloy material was determined according to JIS B0601:2001 using a surface shape measuring instrument (ZYGO New View 5000 5032, Zygo Corporation) with a measuring region set to 1.4 mm × 1.1 mm. "Ra" is a parameter indicating the mean amplitude in the height direction of the roughness curve and indicates the arithmetical mean of the height of the alloy material surface in a certain visual field. The results are set forth in the column "Surface roughness Ra" in Table 3 below.

### <Storage stability>

A semi-transparent plastic bottle was filled with the polishing composition used in each Example or Comparative Example and stored under an atmosphere at 25°C for 7 days. Then, presence of a change of the content was checked by visual observation from the outside of the plastic bottle filled with the polishing composition. When no changes were present, the sample was graded as "Good (○)" in storage stability, and when any change such as precipitation or agglomeration was confirmed, the sample was graded as "Poor (x)" in storage stability. The results are set forth in the column "Stability" in Table 3 below.

**Table 1**

| <Polishing conditions> | |
|---|---|
| Polishing machine | Single-sided polishing machine (platen diameter 380 mm) |
| Polishing pad | Suede type |
| Polishing load | 130 g/cm² |
| Platen rotational frequency | 80 rpm |
| Linear velocity | 63.6 m/min |
| Polishing time | 10 min |
| Supplying rate of polishing composition | 14 mL/min (used without recycling) |
| Object to be polished (alloy material) | Three pieces of 32 mm × 32 mm × 5 mm in each dimension were held by carriers and concurrently polished. |

**Table 2**

| | Colloidal silica | | Oxidizing agent | | pH |
|---|---|---|---|---|---|
| | Concentration [% by mass] | Mean particle size [nm] | Type | Concentration [% by mass] | |
| Formula 1 | 20.0 | 78 | Potassium nitrate | 0.2 | 10.2 |
| Formula 2 | 20.0 | 78 | Potassium nitrate | 0.3 | 10.2 |
| Formula 3 | 20.0 | 78 | Potassium nitrate | 1.0 | 10.2 |
| Formula 4 | 20.0 | 78 | Hydrogen peroxide | 1.0 | 10.0 |
| Formula 5 | 20.0 | 78 | - | - | 10.2 |

**Table 3**

| | Formula | Alloy material | Polishing rate [µm/min] | Surface roughness Ra [nm] | Stability |
|---|---|---|---|---|---|
| Example 1 | Formula 1 | 5052 | 0.13 | 3.5 | ○ |
| Example 2 | Formula 2 | 5052 | 0.13 | 3.3 | ○ |
| Example 3 | Formula 3 | 5052 | 0.14 | 2.5 | ○ |
| Example 4 | Formula 1 | 6063 | 0.15 | 3.5 | ○ |
| Example 5 | Formula 2 | 6063 | 0.15 | 3.2 | ○ |
| Example 6 | Formula 3 | 6063 | 0.17 | 2.1 | ○ |
| Comparative Example 1 | Formula 5 | 5052 | 0.10 | 5.9 | ○ |
| Comparative Example 2 | Formula 5 | 6063 | 0.12 | 5.2 | ○ |
| Comparative Example 3 | Formula 4 | 5052 | 0.15 | 2.6 | × |
| Comparative Example 4 | Formula 4 | 6063 | 0.18 | 2.1 | × |

As shown in Table 3, in each of Examples 1 to 6 where a nitrate was used as the oxidizing agent, the surface roughness Ra was suppressed at a low level compared to the cases of Comparative Examples 1 and 2 containing no oxidizing agent, and an excellent mirror surface was successfully obtained. In Comparative Example 3 or 4 where hydrogen peroxide was used as the oxidizing agent, the stability was confirmed to be inferior to that in Examples 1 to 6. Accordingly, the polishing compositions used in Comparative Examples 3 and 4 are found to be likely to adversely affect the quality of the alloy surface after polishing and the polishing efficiency such as the polishing rate, when used after storage for long period of time.

## Claims

1. A method for polishing an alloy material containing a main component and 0.5% by mass or more of an accessory component element having a Vickers hardness (HV) different from that of the main component by 5 or more, the method being **characterized by**:
polishing a surface of the alloy material using a polishing composition containing abrasive grains and an oxoacid-based oxidizing agent.

2. The method for polishing an alloy material according to claim 1, wherein the main component of the alloy material is at least one selected from the group consisting of aluminum, titanium, iron, nickel, and copper.

3. The method for polishing an alloy material according to claim 1 or 2, wherein the main component of the alloy material is aluminum and the accessory component element is at least one selected from the group consisting of silicon, magnesium, iron, copper, and zinc.

4. The method for polishing an alloy material according to any one of claims 1 to 3,
wherein the oxoacid-based oxidizing agent is at least one selected from the group consisting of nitric acid, nitrous acid, hypochlorous acid, oxalic acid, and salts thereof.

5. The method for polishing an alloy material according to any one of claims 1 to 3,
wherein the oxoacid-based oxidizing agent is at least one selected from the group consisting of nitric acid and salts thereof.

6. The method for polishing an alloy material according to any one of claims 1 to 5,
wherein the abrasive grains are colloidal silica.

7. The method for polishing an alloy material according to any one of claims 1 to 6, comprising preliminarily polishing the alloy material using a preliminary polishing composition before said polishing of the alloy material using the polishing composition.

8. A method for producing an alloy material, comprising polishing an alloy material using the method for polishing an alloy material according to any one of claims 1 to 7.

9. An alloy material produced using the production method according to claim 8.

10. A polishing composition for use in the method for polishing an alloy material according to any one of claims 1 to 7, the polishing composition being **characterized by** containing abrasive grains and an oxoacid-based oxidizing agent.
